# EUROPEAN PATENT SPECIFICATION

(11) **EP 3 470 154 B1**
(45) Date of publication and mention of the grant of the patent: **18.03.2020**
(21) Application number: 17813086.0
(22) Date of filing: 19.05.2017
(51) Int. Cl.: B23B 51/00, B23B 35/00

(54) **HOLE FORMATION METHOD**
LOCHFORMUNGSVERFAHREN
PROCÉDÉ DE FORMATION DE TROU

(30) Priority: 13.06.2016 JP 2016117230
(43) Date of publication of application: 17.04.2019
(73) Proprietor: Mitsubishi Gas Chemical Company, Inc., Tokyo 100-8324 (JP)
(72) Inventor: MATSUYAMA, Yousuke, Yonezawa-shi Yamagata 992-1128 (JP); OGASHIWA, Takaaki, Yonezawa-shi Yamagata 992-1128 (JP); UMEHARA, Noritsugu, Nagoya-shi Aichi 464-8601 (JP); OYAMA, Shintarou, Nagoya-shi Aichi 464-8601 (JP)
(74) Representative: Hoffmann Eitle
(86) International application number: PCT/JP2017/018884
(87) International publication number: WO 2017/217183

(56) References cited:
- EP-A1- 2 979 832
- EP-A2- 1 396 303
- WO-A1-2014/157570
- JP-A- 2004 299 017
- JP-A- 2011 101 910
- JP-A- 2011 101 910
- TW-A- 201 402 804

## Description

### Technical Field

The present invention relates to a hole formation method according to claim 1.

### Background Art

At present, metal materials (mainly, an aluminum alloy) are adopted as materials of the body structures of aircraft (structural materials). Although heat-resistant alloys such as a titanium alloy and stainless steel are used for portions capable of having high temperatures, including jet exhaust portions and portions around afterburners in the airframe structure, the conventional aluminum alloy will have insufficient strength due to aerodynamic heating of higher-speed aircraft that are being developed. On this account, the harder titanium alloy or stainless steel should be used as the structural material of a main airframe structure. Such structural materials constituting the airframe of aircraft are intended to be drilled, and the formed holes are used to join metal materials to each other or to join a metal material to a structural material of another material such as CFRP with bolts.

For such metal hole forming, some techniques have been disclosed. For example, the titanium alloy is a difficult-to-machining material and thus shortens the hole-forming life of a drill. To address such a problem, for example, a method in which a cutting oil is sprayed for processing and a method in which the shape of a drill is changed to reduce the load on the drill and to suppress the reduction of the drill service life have been disclosed (for example, see Japanese Patent Application Laid-open No. 2006-150557).

In recent years, fiber-reinforced composite materials (especially, a carbon fiber-reinforced plastic (CFPR) having high tensile strength or high tensile elasticity) have been increasingly used as outer panels of aircraft and vehicles, for example. In the specification, the CFRP means a plastic produced by heat molding or heat pressure molding of a prepreg, which is prepared by impregnating carbon fibers with a matrix resin, or two or more stacked prepregs. A member formed from the CFRP is fixed to a structure with a fastening element such as a bolt and a rivet. On this account, to fix the CFRP to a structure such as an aircraft part, a machining process, specifically, hole forming is involved to form many holes in the CFRP for penetration of fastening elements.

In order to form high-quality holes in a CFRP by hole forming, some techniques have been disclosed. For example, a method of gradually changing the shape of a tool, for example, the curvature or the point angle of a cutting face of a drill has been disclosed (for example, see Japanese Patent Application Laid-open No. 2012-210689).

Other example of the prior art can be found in documents EP 2 979 832 A1 and JP 2011 101910 A.

EP 2 979 832 A1 describes a hole formation method comprising: a hole formation step of machining a portion to be processed of a workpiece material by means of drilling to form a hole while a lubricating entry sheet is held on the drill entering face for assisting machining process.

### Summary

### Technical Problem

To form a hole in a metal, a drill is commonly used, but even when a drill for metal is used, the hole-forming life of the drill is short, and when a common drill is used, the hole-forming life of the drill is extremely short. As the number of processed holes increases, the drill blade is abraded to deteriorate the quality of processed holes. Specifically, a processed hole is likely to have a smaller inner diameter, and burrs are likely to be formed at the outlet side of a penetrating drill. Due to the abrasion of a drill, a clearance may generate between a metal material and a structural material of another material such as CFRP that are fastened with a bolt, causing floating between these structural materials or causing machining chips to get into the formed clearance. Such a phenomenon is considered to be a fatal defect. As described above, the abrasion of a drill blade is highly likely to result in quality problems of processed holes. In such circumstances, especially high-quality hole forming is required for production of an aircraft structure using a titanium alloy material and the like, and it is extremely important to solve problems including the hole-forming life of a drill and the floating between a metal material and a different structural material.

When a drill is used to form a hole in a metal, frictional heat is generated between the rotating drill and the metal to locally increase the temperature around the processed hole. When many holes are processed, the drill and the metal as a workpiece material accordingly store heat as the number of processed holes increases. If having a low thermal conductivity, the metal insufficiently releases the heat, and the temperature around processed holes increases. In such a case, when the temperature of a metal increases, the metal softens, and burrs are formed on a processed hole at the outlet side of the penetrating drill. In some cases, machining chips of a metal are welded to a drill due to processing heat, and an excess load is applied to the drill to stop the processing apparatus. As described above, thermal storage during hole forming is highly likely to result in quality problems of processed holes. In such circumstances, especially high-quality hole forming is required for production of an aircraft structure using a titanium alloy material and the like, and it is extremely important to solve the problems of burrs.

In order to suppress such thermal storage of a portion to be processed and a drill, wet working using a cutting oil or the like has been performed. However, the wet working involves washing after completion of a machining process. When an oil is left around or in a processed hole, a screw as a fastening tool for fastening through the hole may deteriorate, or a fastened portion may loosen. Such a defect may lead to fatal accidents. To address this, Japanese Patent Application Laid-open No. 2006-150557 discloses an improvement of the processability of metals that are difficult to form holes from the viewpoint of machining tools and machining methods, but the effect is still insufficient.

To form a hole in a fiber-reinforced composite material, a drill is also commonly used. In common hole forming by a drill, the hole-forming life of the drill is extremely short, and as the number of processed holes increases, the drill blade is abraded to deteriorate the quality of processed holes. Specifically, a processed hole is likely to have a smaller inner diameter; carbon fibers are likely to fluff at the outlet side of a penetrating drill (hereinafter also called "splintering": a phenomenon in which some of the fibers constituting a fiber-reinforced composite material are not cut down and are left as splintering around a processed hole); and prepreg layers constituting a fiber-reinforced composite material are likely to separate (hereinafter also called delamination). An abraded drill blade may form a processed hole having an uneven inner diameter, and delamination may be caused from an unevenness of a processed hole as a starting point. Such a phenomenon is considered to be a fatal defect. As described above, the abrasion of a drill blade is highly likely to result in quality problems of processed holes. In such circumstances, especially high-quality hole forming is required for production of an aircraft structure using CFRP and the like, and it is extremely important to solve problems including the fluffing and delamination.

In CFRP hole forming, as the tool abrasion proceeds to increase the machining resistance, quality problems of processed holes are likely to be caused. In particular, a high-strength CFRP for aircraft or the like contains carbon fibers at high density, thus a drill scratches the carbon fibers more frequently, and the machining tool is more rapidly abraded. As a countermeasure, a tool is exchanged earlier to maintain hole qualities, and this increases the proportion of the tool cost in the processing costs at present. To address this, Japanese Patent Application Laid-open No. 2012-210689 discloses an improvement of the processability of fiber-reinforced composite materials that are difficult to form holes (for example, CFRPs) from the viewpoint of tools, but the effect is still insufficient.

In view of such circumstances, the present invention is intended to provide a hole formation method enabling the formation of a high-quality hole even when a workpiece material is a difficult-to-machining metal material or a fiber-reinforced composite material and to provide a drill bit used in the method.

### Solution to Problem

The inventors of the present invention have carried out intensive studies for achieving the above objects. As a result, the inventors have found that the objects can be achieved by a hole formation method comprising the features of claim 1.

In other words, the present invention is as follows.
[1] A hole formation method including
   a hole formation step of machining a portion to be processed of a workpiece material by means of drilling to form a hole while a lubricant material for assisting machining process is in contact with at least one of a drill bit and the portion to be processed, wherein the lubricant material for assisting machining process has a sheet shape; wherein the drill bit (1) includes at least one cutting edge and a leading flank adjacent to the cutting edge, the leading flank being set to have a surface roughness Ra of 2.0 µm or more and 3.0 µm or less, and when the portion to be processed is machined by means of drilling to form a hole, the lubricant material for assisting machining process is held on the leading flank.
   Preferred embodiments are defined in the dependent claims.
[2] According to a preferred embodiment, the workpiece material has a thickness of 1.0 mm or more, and
   a hole formed in the hole formation step has a diameter of 3.0 mm or more.
[3] According to another preferred embodiment, the workpiece material is a difficult-to-machining metal material.
[4] According to another preferred embodiment, the workpiece material is a fiber-reinforced composite material.
[5] According to another preferred embodiment, the workpiece material is a material in which a difficult-to-machining metal material is in close contact with a fiber-reinforced composite material.
[6] According to another preferred embodiment, the difficult-to-machining metal material is any one material selected from the group consisting of a titanium alloy, an aluminum alloy, a magnesium alloy, a low alloy steel, a stainless steel, and a heat-resistant alloy.
[7] According to another preferred embodiment, the difficult-to-machining metal material is a Ti-6AI-4V titanium alloy.

### Advantageous Effects of Invention

According to the present invention, a hole formation method enabling the formation of a high-quality hole even when a workpiece material is a difficult-to-machining metal material or a fiber-reinforced composite material can be provided.

### Brief Description of Drawings

Fig. 1 is a schematic view of a point of a drill bit.
Fig. 2 is a schematic view showing an example hole formation method pertaining to an embodiment of the present invention.

### Description of Embodiments

Embodiments of the present invention will now be described with reference to drawings. The following embodiments are merely preferred application examples, and the scope of the present invention is not limited to them.

### <Drill bit>

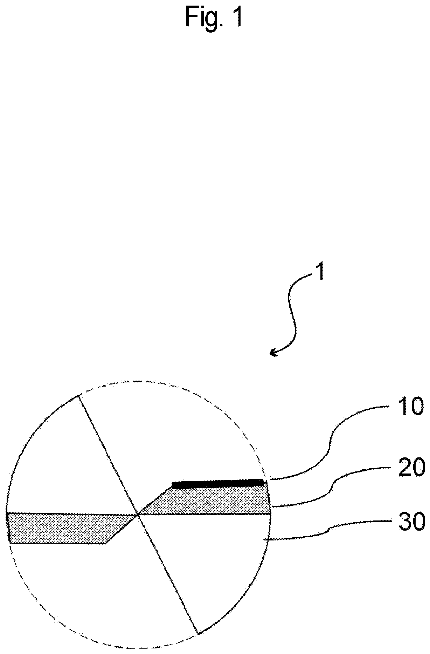

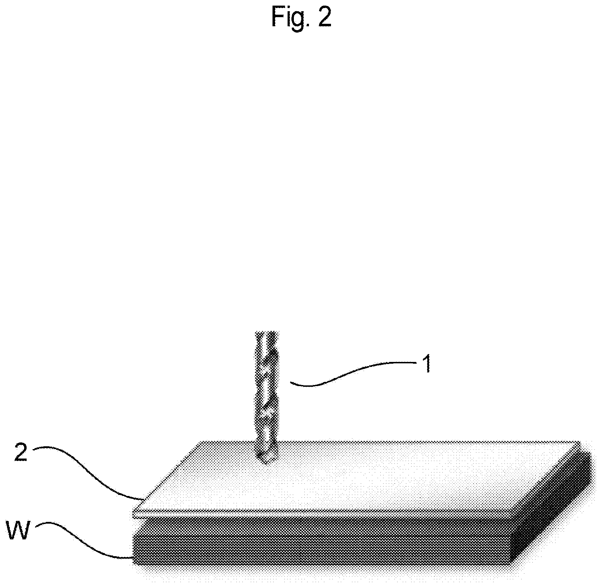

With reference to Fig. 1 and Fig. 2, the structure of a drill bit 1 pertaining to an embodiment of the present invention will be described. A drill bit 1 pertaining to the present embodiment is, as shown in Fig. 2, used to form a hole by machining a portion to be processed of a workpiece material W by means of drilling while a lubricant material for assisting machining process (hereinafter also called "lubricant material") 2 is in contact with the portion to be processed. The point of the drill bit 1, as shown in Fig. 1, has a pair of cutting edges 10 and faces (leading flanks) 20 adjacent to the corresponding cutting edges 10. In the present embodiment, two cutting edges 10 are adopted as an example, but at least one cutting edge 10 can be provided, and three or more cutting edges may be provided. In the present invention, the "leading flank" means a face that is provided just adjacent to a cutting edge and is in contact with the cutting edge, and is not what is called a "body clearance" (a face formed to leave a margin width in a fluted land of a drill in order to form a clearance between the outer periphery of a drill and a portion to be processed, for preventing friction during a machining process).

Each leading flank 20 of the drill bit 1 is set to have a surface roughness Ra of 2.0 µm or more and 3.0 µm or less. When the surface roughness Ra of the leading flank 20 is set within the above range, a lubricating component of the lubricant material 2 can be appropriately held on (concaves of) the leading flank 20, and the lubricating component of the lubricant material 2 can be readily spread on the point of the drill bit 1. If a leading flank 20 has a surface roughness Ra of less than 2.0 µm, the lubricating component of the lubricant material 2 is unlikely to be spread on the point of the drill bit 1, and thus such a condition is unfavorable. If a leading flank 20 has a surface roughness Ra of more than 3.0 µm, the resistance increases at a portion at which the point of the drill bit 1 comes into contact with the workpiece material W, thus a larger load is applied to the drill bit 1, and a tool may be broken. Hence, such a condition is unfavorable. The leading flank 20 is preferably set to have a surface roughness Ra of 2.0 µm or more and 2.6 µm or less and more preferably 2.0 µ or more and 2.2 µm or less.

As described above, the drill bit 1 can include at least one cutting edge 10 and a leading flank 20 adjacent to the cutting edge 10, and other shapes and structures (for example, the number of cutting edges 10, the point angle of the drill bit 1, and the torsion angle of grooves) can be appropriately set. For example, as shown in Fig. 1, a drill bit 1 having the shape with trailing flanks 30 adjacent to the leading flanks 20 may be adopted. The material of the drill bit 1 is preferably a cemented carbide prepared by sintering a hard metal carbide powder. Examples of such a cemented carbide include, but are not necessarily limited to, a metal prepared by sintering a mixture of tungsten carbide and cobalt as a binder. Such a cemented carbide may contain titanium carbide, tantalum carbide, or the like for further improving material properties depending on intended purposes. The drill bit 1 preferably has a diameter of 1 mmφ or more and 10 mmφ or less, and more preferably 2 mmφ or more and 7 mmφ or less, which is typically used for hole forming in aircraft base materials.

### <Hole formation method>

Next, a hole formation method using the drill bit 1 pertaining to the present embodiment will be described.

A hole formation method pertaining to the present embodiment includes a hole formation step of machining a portion to be processed of a workpiece material W by means of drilling to form a hole while a lubricant material for assisting machining process 2 is in contact with a drill bit 1 and/or the portion to be processed, and in the hole formation step, the drill bit 1 pertaining to the present embodiment is used.

Fig. 2 is a schematic view showing an example hole formation method of the present embodiment. As shown in Fig. 2, a lubricant material 2 is used to form a hole in a workpiece material W (especially, a difficult-to-machining material). Specifically, the lubricant material 2 is placed at a portion of a workpiece material W to be an inlet of the drill bit 1 (approaching face), and the drill bit 1 is used to process the workpiece material W. In the hole formation method of the embodiment, the hole formation step may be any step in which a portion to be processed of a workpiece material W is cut by means of drilling to form a hole while the lubricant material 2 is in contact with the drill bit 1 and/or the portion to be processed. For example, the drill bit 1 having been in contact with the lubricant material 2 can be used to perform drilling. "While being in contact" is not limited to particular conditions, and, for example, includes a case in which a contact step of bonding the lubricant material 2 to the drill bit 1 is performed before drilling, and then the drill bit 1 with the lubricant material 2 is used to perform drilling, a case in which a close contact step of bringing the lubricant material 2 into close contact with a portion to be processed of a workpiece material W, and then the portion to be processed of the workpiece material W is cut from the side with the lubricant material 2, and a combination case of them.

When such a method is adopted, the drill bit 1 in which the surface roughness Ra of the leading flank 20 is set to a particular value (in other words, the leading flank 20 has an appropriate unevenness) is used to form a hole by machining a portion to be processed of a workpiece material W by means of drilling while the lubricant material 2 is in contact with the portion to be processed, and thus a lubricating component of the lubricant material 2 can be appropriately held on (concaves of) the leading flank 20 of the drill bit 1. Accordingly, the lubricating component of the lubricant material 2 can be readily spread on the point of the drill bit 1 (the cutting edges 10, the leading flanks 20, the trailing flanks 30, for example), and thus the lubricant material 2 can achieve higher lubricating effect. As a result, even when the workpiece material W is a difficult-to-machining metal material, burrs on the workpiece material W at the outlet side of the drill bit 1 can be suppressed, and even when the workpiece material W is a fiber-reinforced composite material, chippings of the workpiece material W or splintering can be reduced. Accordingly, a high-quality hole can be formed. In addition, the lubricant material 2 can achieve higher lubricating effect, and thus the frictional resistance between the workpiece material W and the surface of the drill bit 1 can be suppressed to reduce the load on the drill bit 1. As a result, the service life of each drill bit 1 can be prolonged, and the productivity can be improved.

### [Contact step]

The hole formation method pertaining to the present embodiment may be any method in which a portion to be processed of a workpiece material W is cut by means of drilling to form a hole while the lubricant material for assisting machining process 2 is in contact with the drill bit 1 and/or the portion to be processed, and may include a contact step as needed. The contact step is a step of bringing the lubricant material 2 into contact with the drill bit 1 before hole formation. The method is not specifically limited. For example, by placing the lubricant material 2 on a drill bit 1 approaching face, the lubricant material 2 can be bonded to the drill bit 1 before hole formation. By forming a hole while the lubricant material 2 is in contact with the drill bit 1, the lubricant material 2 can be bonded to the drill bit 1. By previously applying the lubricant material 2 to the drill bit 1, the lubricant material 2 can be bonded to the drill bit 1. By cutting and hole-forming the lubricant material 2 by the drill bit 1 before hole formation, the lubricant material 2 can be bonded to the drill bit 1.

### [Close contact step]

The hole formation method of the embodiment may include a close contact step of previously bringing the lubricant material for assisting machining process 2 into close contact with the portion to be processed of the workpiece material W. The close contact position on the workpiece material W with the lubricant material 2 may be a part to be an inlet of the drill bit 1 or both parts to be an inlet and an outlet of the drill bit 1. Accordingly, the load on the drill bit 1 can be reduced as described above, and burrs, chippings, or splintering formed around a hole can be reduced. The "part to be an outlet" can also be expressed as a face to be an outlet when the part is a face. Similarly, the "part to be an inlet" can also be expressed as a face to be an inlet.

Examples of the method of bringing the workpiece material W into close contact with the lubricant material for assisting machining process 2 include, but are not necessarily limited to, a method of physically fixing the lubricant material 2 and the workpiece material W with a clip or a jig and a method of forming a layer of a compound having tackiness (adhesive layer) on a surface of the lubricant material 2 that comes into contact with a metal as the workpiece material W. Specifically, a method of using a lubricant material 2 with an adhesive layer eliminates the necessity of fixing with a jig or the like and thus is preferred. In the present specification, a layer of a compound having tackiness used for fixing a workpiece material W and a lubricant material 2 is defined as an adhesive layer.

### [Hole formation step]

The hole formation step is a step of machining a workpiece material W by means of drilling to form a hole while a lubricant material for assisting machining process 2 is in contact with a drill bit 1 and/or a portion to be processed of the workpiece material W. When the lubricant material 2 is used as described above to, for example, perform hole forming (especially, continuous hole forming), the lubricity between the drill surface including groove surfaces on the side face of the drill bit 1 and the inner wall surface of a processed hole is improved to facilitate the discharge of materials (carbon fibers, for example) machined by cutting edges 10 of the drill bit 1, and the frequency and degree of scratching between the cutting edges 10 of the drill bit 1 and the inner wall surface of the processed hole are reduced. Accordingly, the abrasion of the cutting edges 10 of the drill bit 1 is supposed to be suppressed. The diameter of the hole formed in the hole formation step is not limited to particular values and is 3 mm or more. The diameter of a hole can be adjusted by the diameter of a drill bit 1 used.

In the hole formation step, a common machining technique can be used. To perform a machining process, for example, the machining process can be performed while a gas or a liquid is used to cool a portion to be processed of a workpiece material W and/or a drill bit 1. Examples of the method of cooling a portion to be processed of a workpiece material W and/or a drill bit 1 by using a gas include a method in which a compressed gas is supplied to a portion to be processed of a workpiece material W and/or a drill bit 1 and a method in which a gas around a portion to be processed of a workpiece material W and/or a drill bit 1 is sucked, and accordingly a gas is supplied to the portion to be processed of the workpiece material W and/or the drill bit 1 from the periphery.

### [Lubricant material for assisting machining process]

Examples of the lubricant material for assisting machining process 2 used in the hole formation method of the embodiment include, but are not necessarily limited to, a lubricant material for assisting machining process containing a polymer material and an inorganic filler. Specifically preferred is a lubricant material 2 containing a polymer material such as a water-soluble or water-insoluble thermoplastic resin or thermosetting resin and an inorganic filler such as graphite, molybdenum disulfide, tungsten disulfide, and a molybdenum compound. More specifically, a lubricant material 2 containing a high molecular weight compound (A) having a weight average molecular weight of 5 × 10⁴ or more and 1 × 10⁶ or less, a medium molecular weight compound (B) having a weight average molecular weight of not less than 1 × 10³ and less than 5 × 10⁴, and a carbon (C) is more preferred. By using such a lubricant material 2, the load on a drill bit 1 can be further reduced, and burrs, chippings, or splintering formed around a hole can be more likely to be reduced.

The lubricant material for assisting machining process 2 may be a single layer containing a polymer material and an inorganic filler or may be a laminate including a layer containing a polymer material and an inorganic filler and additional layers. Examples of the additional layer include an adhesive layer for improving the adhesion between the lubricant material 2 and a workpiece material W and a protective layer for preventing the surface of the lubricant material 2 from being scratched. The structure of the lubricant material for assisting machining process 2 will next be described.

### (High molecular weight compound (A))

The high molecular weight compound (A) can function as a lubricant, improves the lubricity of the lubricant material for assisting machining process 2, and can exert the effect of reducing chippings, burrs, or splintering formed around a hole. The high molecular weight compound (A) can further function as a forming agent, improves the formability of the lubricant material 2, and can exert the effect of single layer formability (a substance itself can form a layer (sheet) without any supporting substrate). The high molecular weight compound (A) may be any compound having a weight average molecular weight of 5 × 10⁴ or more and 1 × 10⁶ or less, and examples include water-soluble or water-insoluble thermoplastic resins and thermosetting resins. Specifically, a water-soluble thermoplastic resin and/or a water-insoluble thermoplastic resin is preferred, and a water-soluble thermoplastic resin is more preferred. Examples of the water-soluble or water-insoluble thermoplastic resin include, but are not necessarily limited to, the water-soluble resins and water-insoluble resins described below. The "water-soluble resin" means such a polymer compound that 1 g or more of the polymer compound is dissolved in 100 g of water at 25°C and 1 atmosphere. The high molecular weight compound (A) may be a single compound or a combination of two or more of such compounds.

When a water-soluble resin is used, the discharging performance of cutting dust during a machining process is likely to be improved due to the lubricity of the water-soluble resin. When containing a water-soluble resin, the lubricant sheet for assisting machining process obtains appropriate softness as the surface hardness, and thus the load on a drill bit 1 can be more likely to be reduced. In addition, a resin component adhering to a portion to be processed of a workpiece material W can be easily removed after a machining process. Examples of the water-soluble resin include, but are not necessarily limited to, polyalkylene oxide compounds such as polyethylene oxide, polypropylene oxide, and polyethylene oxide-propylene oxide copolymers; polyalkylene glycols such as polyethylene glycol and polypropylene glycol; ester compounds of polyalkylene glycols; ether compounds of polyalkylene glycols; monostearate compounds of polyalkylene glycols, such as polyethylene glycol monostearate, polypropylene glycol monostearate, and polyglycerol monostearate; water-soluble urethanes; water-soluble polyether resins; water-soluble polyesters; sodium poly(meth)acrylate; polyacrylamide; polyvinylpyrrolidone; polyvinyl alcohol; sugars such as cellulose and derivatives thereof; and modified polyamides. Specifically, polyethylene oxide, polyethylene glycol, and water-soluble polyether resins are preferred from the above viewpoint.

When a water-insoluble resin is used, the lubricant sheet for assisting machining process is likely to have a higher surface hardness than when a water-soluble resin is used. Hence, for example, the biting performance of a drill bit 1 during drilling is improved, and a hole can be formed at an intended position. In addition, the lubricant sheet for assisting machining process has higher rigidity, and the handling properties are improved. Examples of the water-insoluble resin include, but are not necessarily limited to, urethane polymers; acrylic polymers; vinyl acetate polymers; vinyl chloride polymers; polyester polymers; polystyrene resins such as polyethylene wax, styrene homopolymers (GPPS), styrene-butadiene copolymers (HIPS), styrene-(meth)acrylic acid copolymers (for example, MS resin); and copolymers of them.

The high molecular weight compound (A) has a weight average molecular weight of 5 × 10⁴ or more, preferably 6 × 10⁴ or more, more preferably 1 × 10⁵ or more, and even more preferably 1.25 × 10⁵ or more. The high molecular weight compound (A) has a weight average molecular weight of 1 × 10⁶ or less, preferably 8 × 10⁵ or less, more preferably 7 × 10⁵ or less, and even more preferably 6 × 10⁵ or less. A high molecular weight compound (A) having a weight average molecular weight of 5 × 10⁴ or more further improves the formability. A high molecular weight compound (A) having a weight average molecular weight of 1 × 10⁶ or less further improves the lubricity. When two or more high molecular weight compounds (A) are used, each compound preferably satisfies the above weight average molecular weight. In the present embodiment, the weight average molecular weight can be determined by the method described in examples (the same applies hereinafter).

The high molecular weight compound (A) may include a high molecular weight compound (A-1) having a weight average molecular weight of 3 × 10⁵ or more and 1 × 10⁶ or less and/or a high molecular weight compound (A-2) having a weight average molecular weight of not less than 5 × 10⁴ and less than 3 × 10⁵, and preferably includes both the high molecular weight compound (A-1) and the high molecular weight compound (A-2). When the high molecular weight compound (A-1) and the high molecular weight compound (A-2) are used in combination, the formability and the lubricity are more likely to be improved.

The high molecular weight compound (A-1) has a weight average molecular weight of 3 × 10⁵ or more, preferably 4 × 10⁵ or more, more preferably 4.5 × 10⁵ or more, and even more preferably 5 × 10⁵ or more. The high molecular weight compound (A-1) has a weight average molecular weight of 1 × 10⁶ or less, preferably 8 × 10⁵ or less, more preferably 7 × 10⁵ or less, and even more preferably 6 × 10⁵ or less.

In the lubricant material for assisting machining process 2, the content of the high molecular weight compound (A-1) is preferably 5 parts by mass or more, more preferably 10 parts by mass or more, and even more preferably 15 parts by mass or more relative to 100 parts by mass of the high molecular weight compound (A), the medium molecular weight compound (B), and the carbon (C) in total. In the lubricant material 2, the content of the high molecular weight compound (A-1) is preferably 35 parts by mass or less, more preferably 30 parts by mass or less, and even more preferably 25 parts by mass or less relative to 100 parts by mass of the high molecular weight compound (A), the medium molecular weight compound (B), and the carbon (C) in total. When the content of the high molecular weight compound (A-1) is 5 parts by mass or more, the formability is more likely to be improved. When the content of the high molecular weight compound (A-1) is 35 parts by mass or less, the lubricity is more likely to be improved.

The high molecular weight compound (A-2) has a weight average molecular weight of 5 × 10⁴ or more, preferably 6 × 10⁴ or more, more preferably 1 × 10⁵ or more, and even more preferably 1.25 × 10⁵ or more. The high molecular weight compound (A-2) has a weight average molecular weight of less than 3 × 10⁵, preferably 2.5 × 10⁵ or less, and more preferably 2 × 10⁵ or less.

In the lubricant material for assisting machining process 2, the content of the high molecular weight compound (A-2) is preferably 5 parts by mass or more, more preferably 10 parts by mass or more, and even more preferably 15 parts by mass or more relative to 100 parts by mass of the high molecular weight compound (A), the medium molecular weight compound (B), and the carbon (C) in total. In the lubricant material 2, the content of the high molecular weight compound (A-2) is preferably 35 parts by mass or less, more preferably 30 parts by mass or less, and even more preferably 25 parts by mass or less relative to 100 parts by mass of the high molecular weight compound (A), the medium molecular weight compound (B), and the carbon (C) in total. When the content of the high molecular weight compound (A-2) is 5 parts by mass or more, the lubricity is more likely to be improved. When the content of the high molecular weight compound (A-2) is 35 parts by mass or less, the formability is more likely to be improved.

In the lubricant material for assisting machining process 2, the content of the high molecular weight compound (A) is preferably 20 parts by mass or more, more preferably 25 parts by mass or more, and even more preferably 30 parts by mass or more relative to 100 parts by mass of the high molecular weight compound (A), the medium molecular weight compound (B), and the carbon (C) in total. In the lubricant material 2, the content of the high molecular weight compound (A) is preferably 60 parts by mass or less, more preferably 55 parts by mass or less, and even more preferably 50 parts by mass or less relative to 100 parts by mass of the high molecular weight compound (A), the medium molecular weight compound (B), and the carbon (C) in total. When the content of the high molecular weight compound (A) is 20 parts by mass or more, the lubricity is more likely to be improved. When the content of the high molecular weight compound (A) is 60 parts by mass or less, the formability is more likely to be improved. When the content of the high molecular weight compound (A) is within the above range, the load on a drill bit 1 is further reduced, and burrs, chippings, or splintering formed around a processed hole are more likely to be reduced.

### (Medium molecular weight compound (B))

The medium molecular weight compound (B) can function as a lubricant, improves the lubricity of the lubricant material for assisting machining process 2, and can exert the effect of reducing chippings, burrs, or splintering formed around a processed hole. The medium molecular weight compound (B) may be any compound having a weight average molecular weight of not less than 1 × 10³ and less than 5 × 10⁴, and examples include water-soluble or water-insoluble thermoplastic resins and thermosetting resins. Specifically, a water-soluble or water-insoluble thermoplastic resin is preferred, and a water-soluble thermoplastic resin is more preferred.

As the water-soluble or water-insoluble thermoplastic resin, a resin that is the same type as the above water-soluble resins or water-insoluble resins and has a weight average molecular weight within the above range can be used. Examples of other medium molecular weight compounds (B) include, but are not necessarily limited to, polyalkylene glycol compounds such as polyethylene glycol, polypropylene glycol, and polytetramethylene glycol; monoether compounds of polyalkylene oxides, such as polyethylene oxide oleyl ether, polyethylene oxide cetyl ether, polyethylene oxide stearyl ether, polyethylene oxide lauryl ether, polyethylene oxide nonylphenyl ether, and polyethylene oxide octylphenyl ether; monostearate compounds of polyalkylene oxides, such as polyethylene oxide monostearate, polyethylene oxide sorbitan monostearate, and polyglycerol monostearate; and polyalkylene oxide compounds such as polyethylene oxide, polypropylene oxide, and polyethylene oxide-propylene oxide copolymers. Specifically, polyethylene oxide monostearate is preferred. By using such a medium molecular weight compound (B), the lubricity is more likely to be improved. The medium molecular weight compound (B) may be a single compound or a combination of two or more of such compounds.

The high molecular weight compound (A) and the medium molecular weight compound (B), which have different molecular weights, can have different melt viscosities and different melting points. By using such a high molecular weight compound (A) and a medium molecular weight compound (B) in combination, the following effects are achieved. For example, when only the high molecular weight compound (A) is used, the lubricant material for assisting machining process 2 has a markedly high viscosity or a markedly high melting point, and accordingly the formability or lubricity of the lubricant material 2 is reduced. When only the medium molecular weight compound (B) is used, the lubricant material 2 has a markedly low viscosity or a markedly low melting point, and accordingly the formability or lubricity of the lubricant material 2 is reduced. The combination use can suppress such reduction. As a result, the load on a drill bit 1 is further reduced, and burrs, chippings, or splintering formed around a processed hole are more likely to be reduced.

The medium molecular weight compound (B) has a weight average molecular weight of 1 × 10³ or more, preferably 1.25 × 10³ or more, more preferably 1.5 × 10³ or more, even more preferably 2 × 10³ or more, still more preferably 2.5 × 10³ or more, and particularly preferably 3 × 10³ or more. The medium molecular weight compound (B) has a weight average molecular weight of less than 5 × 10⁴, preferably 2.5 × 10⁴ or less, more preferably 2 × 10⁴ or less, even more preferably 1 × 10⁴ or less, still more preferably 7.5 × 10³ or less, and particularly preferably 5 × 10³ or less. A medium molecular weight compound (B) having a weight average molecular weight of 1 × 10³ or more further improves the formability. A medium molecular weight compound (B) having a weight average molecular weight of less than 5 × 10⁴ further improves the lubricity.

In the lubricant material for assisting machining process 2, the content of the medium molecular weight compound (B) is preferably 10 parts by mass or more, more preferably 20 parts by mass or more, and even more preferably 30 parts by mass or more relative to 100 parts by mass of the high molecular weight compound (A), the medium molecular weight compound (B), and the carbon (C) in total. In the lubricant material 2, the content of the medium molecular weight compound (B) is preferably 75 parts by mass or less, more preferably 60 parts by mass or less, even more preferably 45 parts by mass or less, and still more preferably 40 parts by mass or less relative to 100 parts by mass of the high molecular weight compound (A), the medium molecular weight compound (B), and the carbon (C) in total. When the content of the medium molecular weight compound (B) is 10 parts by mass or more, the lubricity is more likely to be improved. When the content of the medium molecular weight compound (B) is 75 parts by mass or less, the formability is more likely to be improved. When the content of the medium molecular weight compound (B) is within the above range, the load on a drill bit 1 is further reduced, and burrs, chippings, or splintering formed around a processed hole are more likely to be reduced.

### (Carbon (C))

The carbon (C) can function as a solid lubricant, improves the lubricity of the lubricant material for assisting machining process 2, and can exert the effect of prolonging the service life of a drill bit 1. In addition, the carbon (C) is present in a solid state having a volume at a temperature during a machining process and thus can maintain the lubricity during the machining process. Examples of the carbon (C) include, but are not necessarily limited to, natural graphite, artificial graphite, activated carbon, acetylene black, carbon black, colloidal graphite, pyrolytic graphite, expanded graphite, and flake graphite. Specifically, flake graphite is preferred. When the carbon (C) includes flake graphite, the abrasion reduction performance is more likely to be improved. The carbon (C) may be a single carbon or a combination of two or more of such carbons.

In a machining process using the lubricant material for assisting machining process 2, especially in a continuous machining process, the carbon (C) adheres to the surface or grooves of a drill bit 1 and to the inner face of a processed hole in a workpiece material W to exhibit lubricity. At the machining, the carbon (C) shows less changes in volume and hardness with temperature variation as compared with the high molecular weight compound (A) and the medium molecular weight compound (B). Hence, even when the temperature of a drill bit 1 or a processed portion increases during a machining process, a constant volume and hardness can be maintained. In other words, for example, when a machining process is performed, the carbon (C) is constantly present between a drill bit 1 and a workpiece material W to improve the lubricity, thus can show a bearing-like effect, and provides the effect of suppressing the abrasion of a drill bit 1. The carbon (C) has a moderately higher hardness than other solid lubricants, and thus has excellent bearing effect and excellent lubricity. As a result, the load on a drill bit 1 is further reduced, and burrs, chippings, or splintering formed around a processed hole are more likely to be reduced.

The carbon (C) preferably has an average particle size of 50 µm or more, more preferably 100 µm or more, even more preferably 150 µm or more, and particularly preferably 200 µm or more. The carbon (C) preferably has an average particle size of 1,000 µm or less, more preferably 750 µm or less, even more preferably 500 µm or less, and particularly preferably 300 µm or less. When the average particle size of the carbon (C) is 50 µm or more, the lubricity and the formability are further improved, accordingly the load on a drill bit 1 is further reduced to prolong the service life of a drill, and burrs, chippings, or splintering formed around a processed hole are more likely to be reduced. When the average particle size of the carbon (C) is 1,000 µm or less, the abrasion of the point of a drill bit 1 is more likely to be reduced. When two or more carbons (C) are contained, each average particle size can satisfy the above range.

In the specification of the present application, the average particle size of the carbon (C) means a median diameter. The median diameter is a particle diameter at a 50% height on a cumulative distribution curve of particle sizes (based on number) (D50 value) and can be determined by the method described in examples.

In the lubricant material for assisting machining process 2, the content of the carbon (C) is preferably 5 parts by mass or more, more preferably 15 parts by mass or more, even more preferably 20 parts by mass or more, still more preferably 25 parts by mass or more, and particularly preferably 30 parts by mass or more relative to 100 parts by mass of the high molecular weight compound (A), the medium molecular weight compound (B), and the carbon (C) in total. In the lubricant material 2, the content of the carbon (C) is preferably 70 parts by mass or less, more preferably 65 parts by mass or less, and even more preferably 60 parts by mass or less relative to 100 parts by mass of the high molecular weight compound (A), the medium molecular weight compound (B), and the carbon (C) in total. When the content of the carbon (C) is 5 parts by mass or more, the lubricity is more likely to be improved. When the content of the carbon (C) is 70 parts by mass or less, the formability is more likely to be improved. When the content of the carbon (C) is within the above range, the load on a drill bit 1 is further reduced, and burrs, chippings, or splintering formed around a processed hole are more likely to be reduced.

### (Additional components)

The lubricant material for assisting machining process 2 may contain additional components as needed. Examples of the additional components include a lubricity improving component, a formability improving component, a plasticizer, a softening agent, a surface control agent, a leveling agent, an antistatic agent, an emulsifier, an antifoaming agent, a wax additive, a coupling agent, a rheology control agent, an antiseptic agent, an antifungal agent, an antioxidant, a light stabilizer, a nucleating agent, an organic filler, an inorganic filler, a solid lubricant, a heat stabilizer, and a coloring agent.

Examples of the lubricity improving component include, but are not necessarily limited to, amide compounds such as ethylenebisstearamide, oleamide, stearamide, and methylenebisstearamide; fatty acid compounds such as lauric acid, stearic acid, palmitic acid, and oleic acid; fatty acid ester compounds such as butyl stearate, butyl oleate, and glycol laurate; aliphatic hydrocarbon compounds such as liquid paraffin; and higher aliphatic alcohols such as oleyl alcohol. At least one component of them can be selected.

Examples of the formability improving component include, but are not necessarily limited to, thermosetting resins such as an epoxy resin, a phenol resin, a cyanate resin, a melamine resin, a urea resin, and a thermosetting polyimide. At least one component of them can be selected.

When a lubricant material for assisting machining process 2 containing a plasticizer or a softening agent is placed on a curved surface of a workpiece material W (for example, CFRP), the stress or distortion on the lubricant material 2 is reduced, for example, thus the lubricant material 2 can be prevented from cracking, and the curved surface following properties is more likely to be improved. Examples of the plasticizer and the softening agent include, but are not necessarily limited to, phthalic acid esters, adipic acid esters, trimellitic acid esters, polyesters, phosphoric acid esters, citric acid esters, epoxidized vegetable oils, and sebacic acid esters.

Examples of the solid lubricant other than the carbon (C) include, but are not necessarily limited to, molybdenum disulfide, tungsten disulfide, molybdenum compounds, polytetrafluoroethylene, and polyimide.

### (Adhesive layer)

The lubricant material for assisting machining process 2 may have an adhesive layer on a face to come into contact with a workpiece material W. When an adhesive layer is provided, the adhesion between the lubricant material 2 and a workpiece material W is more likely to be improved.

The adhesive layer may contain any component, and examples of the component include thermoplastic resins and/or thermosetting resins. Examples of the thermoplastic resin include, but are not necessarily limited to, urethane polymers, acrylic polymers, vinyl acetate polymers, vinyl chloride polymers, polyester polymers, and copolymers of them. Examples of the thermosetting resin include, but are not necessarily limited to, resins such as a phenol resin, an epoxy resin, a melamine resin, a urea resin, an unsaturated polyester resin, an alkyd resin, a polyurethane, a thermosetting polyimide, and a cyanate resin. Specifically, acrylic polymers are preferred, and solvent type acrylic adhesives and acrylic emulsion adhesives (aqueous type) are more preferred because no residual adhesive is left on a workpiece material to be machined (for example, CFRP) and such characteristics as to enable easy adhesion at normal temperature are required.

The adhesive layer may contain, in addition to components for the adhesive layer, deterioration inhibitors such as an antioxidant and inorganic fillers such as calcium carbonate, talc, and silica as needed.

When the lubricant material for assisting machining process 2 is removed from a workpiece material W after a machining process, the amount of the lubricant material 2 and/or the components of the adhesive layer adhering to the workpiece material W is preferably 1.0 × 10⁻⁸ g or less and more preferably 5.0 × 10⁻⁹ g or less in 1 mm² of the contact portion between the workpiece material W and the lubricant material 2 and of the portion to be processed. The lower limit of the amount of the lubricant material 2 and/or the components of the adhesive layer adhering to the workpiece material W is not limited to particular values and is preferably 0.

### (Thickness)

The thickness of the lubricant material for assisting machining process 2 except the adhesive layer is appropriately set depending on the machining method of a workpiece material W for machining, a disconnection method, the area and volume of a portion to be processed, the diameter of a drill bit 1 used for hole forming, the structure and thickness of CFRP, and the like, and thus is not limited to particular values. Specifically, the lubricant material 2 preferably has a thickness of 0.1 mm or more, more preferably 0.2 mm or more, and even more preferably 0.5 mm or more. The lubricant material 2 preferably has a thickness of 20 mm or less, more preferably 10 mm or less, and even more preferably 5 mm or less. When the lubricant material 2 has a thickness of 0.1 mm or more, the machining stress is sufficiently reduced. For example, when drilling is performed, the load on a drill bit 1 is reduced, and breaking of a drill bit 1 is more likely to be prevented. When a lubricant material 2 having a thickness of 20 mm or less is used to perform drilling, folding of the lubricant material 2 on a drill bit 1 is suppressed, and the lubricant material 2 is more likely to be prevented from cracking.

In addition, a resin contained in the lubricant material for assisting machining process 2 is prevented from functioning as a binder for cutting powder, and the cutting powder is likely to be prevented from staying in a processed hole. Accordingly, unevenness in a hole is likely to be prevented from enlarging. In other words, a lubricant material 2 having an appropriate composition and an appropriate thickness can provide higher lubricity. For example, when drilling is performed, cutting powder can be most appropriately discharged through grooves on the side face of a drill bit 1. In order to further achieve the effects of the invention, the total thickness of the lubricant material 2 is preferably appropriately adjusted within the above range, and a plurality of thin lubricant materials 2 can be stacked.

The thickness of the adhesive layer is not limited to particular values and is preferably 0.01 mm or more and more preferably 0.05 mm or more. The lubricant material for assisting machining process preferably has a thickness of 5 mm or less and more preferably 2.5 mm or less.

The thickness of each layer constituting the lubricant material for assisting machining process 2 is determined by the following procedure. First, a cross section polisher (CROSS-SECTION POLISHER SM-09010 manufactured by JEOL DATUM Ltd.) or an ultramicrotome (EM UC7 manufactured by Leica) is used to cut down a lubricant material 2 in a perpendicular direction to the lubricant material 2. Next, a scanning electron microscope (SEM, VE-7800 manufactured by KEYENCE) is used to observe a cross section from the perpendicular direction to the cross section, and the thickness of each layer constituting the lubricant material 2 is measured. At the measurement, thicknesses are measured at five points for one field of view, and the average is calculated as the thickness of the corresponding layer.

### [Method for producing lubricant material for assisting machining process]

The method for producing the lubricant material for assisting machining process 2 is not limited to particular methods, and a conventionally known method in which a resin composition containing a resin such as a polymer material and a filler (for example, an inorganic filler) is formed into a sheet or a block having a round bar shape, a square bar shape, or the like can be widely used. Examples include a method in which a high molecular weight compound (A), a medium molecular weight compound (B), and a carbon (C) are mixed in the presence of a solvent or in the absence of a solvent, the mixture is applied onto a substrate, cooled, and solidified to form a sheet, and the substrate is removed to yield a lubricant material 2 and a method in which a high molecular weight compound (A), a medium molecular weight compound (B), and a carbon (C) are mixed in the presence of a solvent or in the absence of a solvent, the mixture is extruded into a sheet shape, and the sheet is drawn, as needed, to yield a lubricant material 2.

When the lubricant material for assisting machining process 2 is such a laminate as described above (for example, a lubricant sheet for assisting machining process including an adhesive layer and a protective layer), examples of the method for producing the laminate include, but are not necessarily limited to, a method in which a layer is formed directly on at least one side of a previously produced layer and a method in which a previously produced layer is bonded to another layer with an adhesive resin or by heat laminating.

The method of forming an adhesive layer on the surface of a lubricant material for assisting machining process 2 may be any known method used industrially. Specifically, examples include a method of forming an adhesive layer by rolling, curtain coating, spraying, or the like and a method of previously forming an adhesive layer having an intended thickness by using a roller, a T-die extruder, or the like. The adhesive layer may have any thickness, and a suitable thickness can be appropriately set depending on the curvature of a workpiece material W or the structure of a lubricant material 2.

To produce a lubricant material for assisting machining process 2 in a molten state, a resin composition prepared by mixing a resin and a filler can be used as the lubricant material 2, or a resin composition prepared by mixing a resin, a filler, and a solvent can be used as the lubricant material 2.

### [Workpiece material]

Examples of the workpiece material W include a difficult-to-machining metal material, a fiber-reinforced composite material, and a composite material in which a fiber-reinforced composite material is in close contact with a difficult-to-machining metal material.

The difficult-to-machining metal material may be any metal commonly used as a structural material, and examples include titanium alloys, aluminum alloys, magnesium alloys, low alloy steels, stainless steels, and heat-resistant alloys. Specifically, titanium alloys are preferred, and of the titanium alloys, Ti-6AI-4V that is made from titanium, aluminum, and vanadium and has higher strength is particularly preferred. The tensile strength of the titanium alloy is twice as high as that of the aluminum alloy, and the titanium alloy is a material having excellent corrosion resistance and heat resistance but is a difficult-to-machining material having high hardness. Hence, special machining conditions or a drill bit 1 having a special shape is required in related art. Use of the lubricant material for assisting machining process 2 eliminates special machining conditions or use of a drill bit 1 having a special shape, and the service life of a drill bit 1 can also be prolonged. From the viewpoint of applications, a metal material used as, for example, a material of the body structure of aircraft is preferred. As a metal has a higher strength, using the lubricant material 2 provides a more marked effect of prolonging the service life of a drill bit 1. The difficult-to-machining metal material may be a single material or a laminate of two or more of such materials.

In the present embodiment, the "difficult-to-machining metal material" has a Vickers hardness of 100 or more. The Vickers hardness can be determined in accordance with JIS Z 2244: 2009, "Vickers hardness test-Test method".

When the workpiece material W is a fiber-reinforced composite material densely containing fibers, a large amount of fibers are cut, and cutting edges 10 of a drill bit 1 are likely to be abraded. By using the lubricant material for assisting machining process 2, the abrasion of the cutting edges 10 of the drill bit 1 can be suppressed. When a carbon fiber plastic is processed by an abraded drill bit 1, carbon fibers are forcedly cut, thus stacked prepregs are likely to cause delamination, and consequently uncut carbon fibers are more likely to be formed at the outlet side of a penetrating drill bit 1 unfortunately. However, by using the lubricant material 2, splintering can be further suppressed.

When the fiber-reinforced composite material is a UD material, a fiber buckling portion is likely to be formed on the inner wall of a hole by cutting edges of a drill bit 1 entering at such an angle as to bite and scoop carbon fiber bundles. By using the lubricant material for assisting machining process 2, fiber buckling is suppressed, and a temperature increase due to frictional heat is also suppressed. Hence, a matrix resin is unlikely to reach the glass transition point (temperature) or the softening point thereof, thus tightly bundled carbon fibers can be maintained, and fiber buckling can be suppressed. The "UD material" is a fiber-reinforced composite material including a cloth material in which fibers are arranged unidirectionally.

The fiber-reinforced composite material may be any composite material including a matrix resin and reinforced fibers. Examples of the matrix resin include, but are not necessarily limited to, thermosetting resins such as an epoxy resin, a phenol resin, a cyanate resin, a vinyl ester resin, and an unsaturated polyester resin; and thermoplastic resins such as an acrylonitrile-butadiene-styrene (ABS) resin, a polyamide (PA) resin, a polypropylene (PP) resin, a polycarbonate (PC) resin, a methyl methacrylate resin, polyethylene, acrylic, and a polyester resin. Examples of the reinforced fibers include, but are not necessarily limited to, glass fibers, carbon fibers, and aramid fibers. The reinforced fibers may have any shape, and examples include filaments, tow, cloth, braids, chopped fibers, milled fibers, felt mats, paper, and prepregs. Specific examples of such a fiber-reinforced composite material include, but are not necessarily limited to, fiber-reinforced plastics (FRP) such as a carbon fiber-reinforced plastic (CFRP), a glass fiber-reinforced plastic (GFRP), and an aramid fiber-reinforced plastic (AFRP). Specifically preferred is a carbon fiber-reinforced plastic (CFRP), which has comparatively large tensile strength and tensile elasticity and has small density. The fiber-reinforced composite material may further contain an inorganic filler, an organic filler, or the like, as needed.

When the workpiece material W is a material in which a fiber-reinforced composite material is in close contact with a difficult-to-machining metal material, as for the penetrating order of a drill bit 1 through the workpiece material W, machining the difficult-to-machining metal material can be followed by machining the fiber-reinforced composite material, or machining the fiber-reinforced composite material can be followed by machining the difficult-to-machining metal material. For example, when the difficult-to-machining metal material is machined in advance, a drill bit 1 may be abraded before machining the fiber-reinforced composite material. When such an abraded drill bit 1 is used for processing, carbon fibers are forcedly cut, thus stacked prepregs are likely to cause delamination, and consequently uncut carbon fibers are more likely to be formed at the outlet side of the penetrating drill bit 1 unfortunately. However, by using the lubricant material for assisting machining process 2, the abrasion of the drill bit 1 during a metal machining process is suppressed, and limitations on a machining process of a fiber-reinforced composite material, in which such abrasion is likely to affect the quality of a processed hole, can be greatly alleviated.

Examples of the composite material of a fiber-reinforced composite material and a difficult-to-machining metal material include, but are not necessarily limited to, a composite material in which a fiber-reinforced composite material and a difficult-to-machining metal material are stacked. Typically, the optimum machining condition greatly differs between the fiber-reinforced composite material and the difficult-to-machining metal material. For the fiber-reinforced composite material, a high rotation speed and a low feed speed are preferred, whereas for the difficult-to-machining metal material, a low rotation speed and a high feed speed are preferred. This is because for drilling of a difficult-to-machining metal material, the temperature increase of a drill bit 1 is suppressed to prevent the abrasion of cutting edges 10 of the drill bit 1. For such incompatible hole forming conditions as above, hole forming conditions are changed at the boundary between CFRP and a titanium alloy, or hole forming is performed in a moderate uniform condition, in practical processing. Alternatively, for example, to suppress the temperature increase of a drill bit 1 in drilling, the following measures have been performed at the time of hole formation in a titanium alloy for aircraft: a cutting oil is poured; or dust is collected by a dust collector while cold air is blown. However, using the lubricant material for assisting machining process 2 provides such a secondary effect as to greatly alleviate the limitations on hole forming conditions of a difficult-to-machining metal material that is likely to generate heat due to frictional heat.

The thickness of the workpiece material W is not limited to particular values and can be 1.0 mm or more. The upper limit of the thickness of the workpiece material W is not limited to particular values and is preferably 40 mm or less, for example. By adopting the hole formation method of the present invention, the abrasion of a drill bit 1 and the qualities of a machined portion (for example, a drilled hole) are more likely to be satisfactory even when a workpiece material W has a thickness of 1.0 mm or more.

### Examples

The present invention will next be specifically described with reference to examples and comparative examples. The following examples are merely exemplified embodiments of the present invention, and the invention is not limited to them.

Table 1 shows a workpiece material W (a material subjected to hole forming), components used for production of a lubricant material for assisting machining process 2, an adhesive layer, a drill bit 1 used for hole forming, a hole forming apparatus, an apparatus used for evaluation, and the like used in examples and comparative examples.

**[Table 1]**

| Classification | Expression in table | Name | Trade name/model | Manufacturer | Remarks |
|---|---|---|---|---|---|
| Workpiece material | Ti | Titanium alloy plate | Ti-6Al-4V | - | Thickness: 3 mmt, material equivalent to aircraft application |
| High molecular weight compound (A) | A-1 | Polyethylene oxide | ALKOX E-45 | Meisei Chemical Works, Ltd. | Mw = 56 × 104 |
| | A-2 | Polyethylene oxide | ALKOX R-150 | Meisei Chemical Works, Ltd. | Mw = 15 × 104 |
| | A-3 | Polyethylene oxide | ALTOP MG-150 | Meisei Chemical Works, Ltd. | Mw = 15 × 104 |
| Medium molecular weight compound (B) | B-1 | Polyoxyethylene monostearate | NONION S-40 | NOF Corporation | Mw = 35 × 102 |
| Carbon (C) | C-1 | Carbon (graphite) | RP99-150 | Ito Graphite Co., Ltd. | Flake, average particle size: 33 µm |
| Aluminum foil | - | High-purity aluminum foil | 1N30-H18 | Mitsubishi Aluminum Co., Ltd. | Thickness: 0.15 mmt |
| Drill bit | - | Cemented carbide drill | RG-GDN | OSG Corporation | Diameter: 6.0 mmΦ |
| | | | | | Point angle: 120° |
| | | | | | Torsion angle: 40° |
| | | | | | Solid drill, without diamond coat |
| Abrasive paper | - | Wet sand paper | 240A | 3M Japan Limited | #240 |
| | - | Wet sand paper | 800A | 3M Japan Limited | #800 |
| | - | Wet sand paper | 1500A | 3M Japan Limited | #1500 |
| Hole forming apparatus | - | Milling machine | - | Hitachi Seiko Ltd. | - |
| Evaluation apparatus | - | Laser microscope | VK-9700 | Keyence Corporation | - |

Each weight average molecular weight of the high molecular weight compounds (A) and the medium molecular weight compound (B) was determined as follows: a high molecular weight compound (A) or the medium molecular weight compound (B) was dissolved or dispersed in 0.05% salt solution and was subjected to liquid chromatography using a GPC (gel permeation chromatography) column with polyethylene glycol as the standard substance to determine the weight average molecular weight as a relative average molecular weight.

The median diameter of the carbon (C) was determined as follows: the carbon was dispersed in a solution containing a hexametaphosphoric acid solution and several drops of Triton; a laser diffraction particle size analyzer was used to determine a maximum length of each projected carbon particle; a cumulative distribution curve of particle sizes (based on number) was then prepared; and the particle diameter at a 50% height on the cumulative distribution curve was determined as the median diameter.

A titanium alloy plate (Ti-6AI-4V) as the workpiece material W had a Vickers hardness of 320.

### [Example 1]

In Example 1, as a drill bit 1, on leading flanks 20 (faces adjacent to cutting edges 10) at the point of a cemented carbide drill (RG-GDN, manufactured by OSG Corporation), unevenness was formed by using an abrasive paper (# 240, manufactured by 3M Japan Limited). The leading flanks at the point of the drill bit 1 had a surface roughness Ra of 2.0 µm. The surface roughness Ra at the point of the drill bit 1 was determined as follows: an image of the point of a drill bit 1 after formation of unevenness was recorded under a V-LASER microscope (VK-9700, manufactured by Keyence Corporation); and from the recorded data, the surface roughness Ra was calculated by using an analysis software.

In Example 1, 7 parts by mass of a polyethylene oxide (ALKOX E-45, manufactured by Meisei Chemical Works, Ltd.), 13 parts by mass of a polyethylene oxide (ALTOP MG-150, manufactured by Meisei Chemical Works, Ltd.), 7 parts by mass of a polyethylene oxide (ALKOX R-150, manufactured by Meisei Chemical Works, Ltd.) as the high molecular weight compounds (A), 50 parts by mass of a polyethylene oxide monostearate (NONION S-40, manufactured by NOF CORPORATION) as the medium molecular weight compound (B), and 33 parts by mass of graphite (RP99-150, Ito Graphite Co., Ltd.) as the carbon (C) were molded with a single screw extruder at a temperature of 140°C, yielding a resin sheet having a thickness of 1.0 mm.

On one face of an aluminum foil (1N30-H18, manufactured by Mitsubishi Aluminum Co., Ltd.) having a thickness of 0.15 mm, a polyester resin layer (Vilonal MD-1200, manufactured by Toyobo Co., Ltd.) having a thickness of 0.01 mm was formed as an adhesion layer, giving adhesion layer-formed aluminum foils.

An adhesion layer-formed aluminum foil was stacked on the resin sheet so that the adhesion layer was in contact with the resin sheet, and on the resulting resin sheet, another adhesion layer-formed aluminum foil was stacked so that the adhesion layer was in contact with the resin sheet. The whole was subjected to thermal lamination to be integrated by using a laminating apparatus (OHL-2400, manufactured by ONC Inc.) at a temperature of 150°C, yielding a sheet of a lubricant material for assisting machining process 2 including three layers of adhesion layer-formed aluminum foil/resin sheet/adhesion layer-formed aluminum foil (lubricant sheet for assisting machining process).

The prepared lubricant sheet for assisting machining process was fixed to a drill bit 1 approaching face on a workpiece material W with a jig, and hole forming was performed in conditions shown in Table 2. The evaluation result of burrs around the processed holes at the outlet side of the drill bit 1 is shown in Table 2.

### [Examples 2 and 3]

In Examples 2 and 3, a drill bit 1 in which unevenness was formed on leading flanks 20 at the point in the same manner as in Example 1 was used. As shown in Table 2, the leading flank 20 at the point of a drill bit 1 had a surface roughness Ra of 2.4 µm in Example 2 and 2.6 µm in Example 3. A lubricant sheet for assisting machining process prepared in the same manner as in Example 1 was fixed to a drill bit 1 approaching face on a workpiece material W with a jig, and hole forming was performed in conditions shown in Table 2. The evaluation results of burrs around the processed holes at the outlet side of the drill bit 1 are shown in Table 2.

### [Comparative Example 1]

In Comparative Example 1, a drill bit in which no unevenness was formed on leading flanks at the point was used (as shown in Table 2, the leading flank at the drill bit point had a surface roughness Ra of 1.6 µm). A lubricant sheet for assisting machining process prepared in the same manner as in Example 1 was fixed to a drill bit approaching face on a workpiece material W with a jig, and hole forming was performed in conditions shown in Table 2. The evaluation result of burrs around the processed holes at the outlet side of the drill bit is shown in Table 2.

### [Comparative Example 2]

In Comparative Example 2, a drill bit in which no unevenness was formed on leading flanks at the point was used, as with Comparative Example 1. Hole forming was performed in conditions shown in Table 2 without the lubricant sheet for assisting machining process that had been used in Examples 1 to 3. The evaluation result of burrs around the processed holes at the outlet side of the drill bit is shown in Table 2.

### [Comparative Examples 3 to 5]

In Comparative Examples 3 to 5, a drill bit in which unevenness was formed on leading flanks at the point in the same manner as in Example 1 was used. As shown in Table 2, the leading flank at a drill bit point had a surface roughness Ra of 2.0 µm in Comparative Example 3, 2.4 µm in Comparative Example 4, and 2.6 µm in Comparative Example 5. Hole forming was performed in conditions shown in Table 2 without the lubricant sheet for assisting machining process that had been used in Examples 1 to 3. The evaluation results of burrs around the processed holes at the outlet side of the drill bit are shown in Table 2.

### [Evaluation: Height of burrs of processed holes at outlet side of drill bit]

In Examples 1 to 3 and Comparative Examples 1 to 5, an image of the outlet side of a penetrating drill bit on the processed hole was recorded under a V-LASER microscope (VK-9700, manufactured by Keyence Corporation), and from the recorded data, the height of burrs of the processed hole at the outlet side of the drill bit was calculated by using an analysis software. At the measurement, the burr heights were measured at eight points, and the average was calculated as the burr height.

**[Table 2]**

| Category | Lubricant sheet for assisting machining process | Drill bit | Workpiece material | | Processing conditions | | | Number of processed holes | Burrs around processed holes at the outlet side of a drill bit |
|---|---|---|---|---|---|---|---|---|---|
| | | Surface roughness of leading flank | Material | Thickness | Drill bit diameter | Rotation speed | Feed speed | | |
| | | | | mm | mmΦ | rpm | mm/min | Holes | µm |
| Example 1 | With | 2.0 | Ti | 3 | 6 | 500 | 25 | 5 | 59 |
| Example 2 | With | 2.4 | Ti | 3 | 6 | 500 | 25 | 5 | 98 |
| Example 3 | With | 2.6 | Ti | 3 | 6 | 500 | 25 | 5 | 80 |
| Comparative Example 1 | With | 1.6 | Ti | 3 | 6 | 500 | 25 | 5 | 130 |
| Comparative Example 2 | Without | 1.6 | Ti | 3 | 6 | 500 | 25 | 5 | 163 |
| Comparative Example 3 | Without | 2.0 | Ti | 3 | 6 | 500 | 25 | 5 | 251 |
| Comparative Example 4 | Without | 2.4 | Ti | 3 | 6 | 500 | 25 | 5 | 298 |
| Comparative Example 5 | Without | 2.6 | Ti | 3 | 6 | 500 | 25 | 5 | 368 |

As apparent from the above results, Comparative Examples 1 and 2, in which a drill bit including, at the point, leading flanks with a surface roughness of less than 2.0 was used, and Comparative Examples 3 to 5, in which no lubricant sheet for assisting machining process was used, gave burrs having a comparatively large height (more than 100 µm), whereas Examples 1 to 3, in which a drill bit 1 including, at the point, leading flanks 20 with a surface roughness of 2.0 to 2.6 µm was used and a lubricant sheet for assisting machining process was used, gave burrs having a small height (less than 100 µm).

The present invention is not intended to be limited to the above embodiments, and embodiments appropriately modified by a person skilled in the art are also encompassed within the invention as long as they remain within the scope of the claims.

### Industrial Applicability

The drill bit and the hole formation method pertaining to the present invention improve processing qualities and reduce processing costs in a machining process of a workpiece material (especially, a difficult-to-machining material) and have industrial applicability.

### Reference Signs List

- 1: drill bit
- 2: lubricant material for assisting machining process
- 10: cutting edge
- 20: leading flank
- 30: trailing flank
- W: workpiece material

## Claims

1. A hole formation method comprising:
a hole formation step of machining a portion to be processed of a workpiece material (W) by means of drilling to form a hole while a lubricant material (2) for assisting machining process is in contact with at least one of a drill bit (1) and the portion to be processed, wherein the lubricant material (2) for assisting machining process has a sheet shape; wherein
the drill bit (1) includes at least one cutting edge and a leading flank (20) adjacent to the cutting edge,
the leading flank (20) being set to have a surface roughness Ra of 2.0 µm or more and 3.0 µm or less, and when the portion to be processed is machined by means of drilling to form a hole, the lubricant material (2) for assisting machining process is held on the leading flank (20).

2. The hole formation method according to claim 1, wherein
the workpiece material (W) has a thickness of 1.0 mm or more, and
a hole formed in the hole formation step has a diameter of 3.0 mm or more.

3. The hole formation method according to claim 1 or 2, wherein the workpiece material (W) is a difficult-to-machining metal material.

4. The hole formation method according to claim 1 or 2, wherein the workpiece material (W) is a fiber-reinforced composite material.

5. The hole formation method according to claim 1 or 2, wherein the workpiece material (W) is a material in which a difficult-to-machining metal material is in close contact with a fiber-reinforced composite material.

6. The hole formation method according to claim 3 or 5, wherein the difficult-to-machining metal material is any one material selected from the group consisting of a titanium alloy, an aluminum alloy, a magnesium alloy, a low alloy steel, a stainless steel, and a heat-resistant alloy.

7. The hole formation method according to claim 3 or 5, wherein the difficult-to-machining metal material is a Ti-6AI-4V titanium alloy.

## Patentansprüche

1. Bohrungsbildungsverfahren, umfassend:
einen Bohrungsbildungsschritt des Zerspanens eines zu bearbeitenden Abschnitts eines Werkstückmaterials (W) mittels Bohren, um eine Bohrung zu bilden, während ein Schmiermaterial (2) zum Unterstützen des Zerspanungsprozesses mit mindestens einem eines Bohrers (1) und des zu bearbeitenden Abschnitt in Kontakt ist, wobei das Schmiermaterial (2) zum Unterstützen des Zerspanungsprozesses eine Folienform aufweist; wobei
der Bohrer (1) mindestens eine Schneidkante und eine Vorderflanke (20) an die Schneidkante anschließend beinhaltet,
wobei die Vorderflanke (20) eingestellt ist, um eine Oberflächenrauigkeit Ra von 2,0 µm oder mehr und 3,0 µm oder weniger aufzuweisen, und, wenn der zu bearbeitende Abschnitt mittels Bohren zerspant wird, um eine Bohrung zu bilden, wobei das Schmiermaterial (2) zum Unterstützen des Zerspanungsprozesses auf der Vorderflanke (20) gehalten wird.

2. Bohrungsbildungsverfahren nach Anspruch 1, wobei
das Werkstückmaterial (W) eine Stärke von 1,0 mm oder mehr aufweist, und eine Bohrung, die bei dem Bohrungsbildungsschritt gebildet wird, einen Durchmesser von 3,0 mm oder mehr aufweist.

3. Bohrungsbildungsverfahren nach Anspruch 1 oder 2, wobei das Werkstückmaterial (W) ein schwer zu zerspanendes Metallmaterial ist.

4. Bohrungsbildungsverfahren nach Anspruch 1 oder 2, wobei das Werkstückmaterial (W) ein faserverstärktes Verbundmaterial ist.

5. Bohrungsbildungsverfahren nach Anspruch 1 oder 2, wobei das Werkstückmaterial (W) ein Material ist, in dem ein schwer zu zerspanendes Metallmaterial in engem Kontakt mit einem faserverstärkten Verbundmaterial steht.

6. Bohrungsbildungsverfahren nach Anspruch 3 oder 5, wobei das schwer zu zerspanende Metallmaterial ein beliebiges Material ist, das aus der Gruppe ausgewählt ist, die aus einer Titanlegierung, einer Aluminiumlegierung, einer Magnesiumlegierung, einem niedriglegierten Stahl, einem rostfreien Stahl und einer hitzebeständigen Legierung besteht.

7. Bohrungsbildungsverfahren nach Anspruch 3 oder 5, wobei das schwer zu bearbeitende Metallmaterial eine Ti-6Al-4V-Titanlegierung ist.

## Revendications

1. Procédé de formation de trou comprenant :
une étape de formation de trou consistant à usiner une portion à traiter d'une matière de pièce de fabrication (W) au moyen d'un perçage pour former un trou tandis qu'une matière lubrifiante (2) pour faciliter le processus d'usinage est en contact avec au moins l'un d'un foret (1) et de la portion à traiter, dans lequel la matière lubrifiante (2) pour faciliter le processus d'usinage est en forme de feuille ; dans lequel
le foret (1) comporte au moins un bord de coupe et une face d'attaque (20) adjacente au bord de coupe,
la face d'attaque (20) étant établie pour avoir une rugosité de surface Ra de 2,0 µm ou plus et de 3,0 µm ou moins, et lorsque la portion à traiter est usinée au moyen d'un perçage pour former un trou, la matière lubrifiante (2) pour faciliter le processus d'usinage est maintenue sur la face d'attaque (20).

2. Procédé de formation de trou selon la revendication 1, dans lequel
la matière de pièce de fabrication (W) a une épaisseur de 1,0 mm ou plus, et
un trou formé dans l'étape de formation de trou a un diamètre de 3,0 mm ou plus.

3. Procédé de formation de trou selon la revendication 1 ou 2, dans lequel la matière de pièce de fabrication (W) est une matière métallique difficile à usiner.

4. Procédé de formation de trou selon la revendication 1 ou 2, dans lequel la matière de pièce de fabrication (W) est une matière composite renforcée de fibres.

5. Procédé de formation de trou selon la revendication 1 ou 2, dans lequel la matière de pièce de fabrication (W) est une matière dans laquelle une matière métallique difficile à usiner est en contact étroit avec une matière composite renforcée de fibres.

6. Procédé de formation de trou selon la revendication 3 ou 5, dans lequel la matière métallique difficile à usiner est une matière quelconque sélectionnée dans le groupe constitué par un alliage de titane, un alliage d'aluminium, un alliage de magnésium, un acier faiblement allié, un acier inoxydable et un alliage résistant à la chaleur.

7. Procédé de formation de trou selon la revendication 3 ou 5, dans lequel la matière métallique difficile à usiner est un alliage de titane Ti-6Al-4V.
